# EUROPEAN PATENT SPECIFICATION

(11) **EP 3 182 682 B1**
(45) Date of publication and mention of the grant of the patent: **03.09.2025**
(21) Application number: 14906322.4
(22) Date of filing: 31.12.2014
(51) Int. Cl.: H04M 19/04, H04M 1/64, H04M 1/663

(54) **PROCESSING METHOD AND PROCESSING DEVICE FOR COMMUNICATION INFORMATION ABOUT TERMINAL AND TERMINAL**
VERARBEITUNGSVERFAHREN UND VERARBEITUNGSVORRICHTUNG ZUR KOMMUNIKATION VON INFORMATIONEN ÜBER EIN ENDGERÄT UND ENDGERÄT
PROCÉDÉ DE TRAITEMENT ET DISPOSITIF DE TRAITEMENT POUR DES INFORMATIONS DE COMMUNICATION CONCERNANT UN TERMINAL ET UN TERMINAL

(30) Priority: 21.11.2014 CN 201410682631
(43) Date of publication of application: 21.06.2017
(73) Proprietor: Yulong Computer Telecommunication Scientific (Shenzhen) Co., Ltd., Shenzhen, Guangdong 518057 (CN)
(72) Inventor: YANG, Lun, Dongguan Guangdong 523808 (CN)
(74) Representative: Mewburn Ellis LLP
(86) International application number: PCT/CN2014/096012
(87) International publication number: WO 2016/078194

(56) References cited:
- EP-A1- 1 686 774
- CN-A- 103 391 374
- CN-A- 103 458 125
- CN-A- 104 008 313
- CN-A- 104 243 716
- CN-A- 104 506 719
- CN-A- 104 506 726
- US-A1- 2005 243 996
- US-A1- 2014 195 927
- US-B1- 8 190 128

## Description

### TECHNICAL FIELD

The present disclosure relates to terminal technical field, and in particular, to a processing method for communication information of a terminal, a processing device for communication information of a terminal, and a terminal.

### BACKGROUND

Presently, for a smart terminal having dual systems, when an incoming call is received, the incoming call is directly answered in a currently running system of the smart terminal. That is, when the smart terminal receives communication information, which system is used to process the communication information is random.

The above method for processing communication information may bring following problems.
1) Which system is used to process communication information cannot be set by users, accordingly user experience is affected.
2) Communication information from some important contacts may be directly processed in a normal system, which may cause leakage of the communication information.
EP 1 686 774 A1 discloses a terminal in which a communication partner to be kept secret is registered as a security member. When an incoming call has arrive, an incoming call notification operation is normally performed if the transmission source is not a security member. If the transmission source is a security member, no incoming call notification is performed.
CN 104008313 A discloses a protecting method and device of privacy information.
US 2005/0243996 A1 discloses a system and method of generating at least two distinctive auditory alerts upon receiving a transmission or telephone call at a device.

### SUMMARY

Based on at least one of the technical problem of the present disclosure, a new processing method for communication information of a terminal is provided. On one hand, a user can independently set a system for processing communication information, thus operation experience of the user can be improved. On the other hand, communication information from important contacts can be set to be processed in a safe system, which can avoid leakage of the communication information from the important contacts, and can effectively ensure safety of the communication information from the important contacts.

The invention is defined in the independent claims: additional embodiments are covered by the dependent claims.

### BRIEF DESCRIPTION OF DRAWINGS

FIG. 1 is a schematic flow chart of a processing method for communication information of a terminal in accordance with an embodiment of the present disclosure.
FIG. 2 is a schematic block diagram of a processing device for communication information of a terminal in accordance with an embodiment of the present disclosure.
FIG. 3 is a structural view of a processing scheme for communication information in accordance with an embodiment of the present disclosure.
FIG. 4 is a schematic flow chart of a processing method for an incoming call in accordance with an embodiment of the present disclosure.
FIG. 5 is a schematic flow chart of a processing method for an incoming call in accordance with another embodiment of the present disclosure.
FIG. 6 is a schematic flow chart of a processing method for an incoming call in accordance with yet another embodiment of the present disclosure.

### DETAILED DESCRIPTION

To understand the above-mentioned purposes, features and advantages of the present disclosure more clearly, the present disclosure will be further described in detail below in combination with the accompanying drawings and the specific implementations. What needs to be illustrated is that, the embodiments of the present application and the features in the embodiments may be combined with one another without conflicts.

Many specific details will be described below for sufficiently understanding the present disclosure. However, the present disclosure may also be implemented adopting other manners different from those described herein. Accordingly, the protection scope of the present disclosure is not limited by the specific embodiments disclosed below, but only by the appended claims.

In the present disclosure, a terminal includes a first system and a second system. The first system may be a normal system, and the second system may be a safe system.

Communication information may include voice communication information and text communication information. The voice communication information may be voice call information, voice call information of third-party applications (for example, QQ, Wechat, and so on), and so on. The text communication information may be message information, mail information, text messages of the third-part applications, and so on.

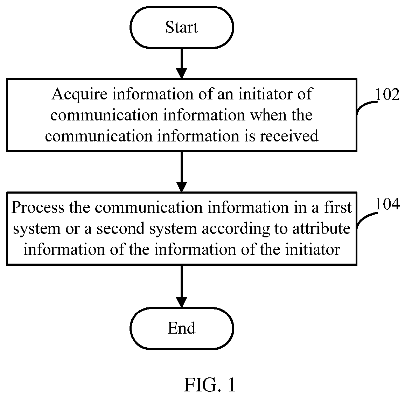

FIG. 1 is a schematic flow chart of a processing method for communication information of the terminal in accordance with an embodiment of the present disclosure.

As illustrated by FIG. 1, the processing method for communication information of the terminal in accordance with an embodiment of the present disclosure includes: step 102, acquiring information of an initiator of communication information when the communication information is received, and step 104, processing the communication information in the first system or the second system according to attribute information of the information of the initiator.

In the technical solution, the system for processing the communication information is selected according to the attribute information of the information of the initiator. On one hand, a corresponding system can be selected to process communication information from some initiators according to the attribute information set by a user. For example, communication information from some initiators are set to be processed in a specified system, which can ensure that the user can independently set a system for processing communication information, thus operation experience of the user can be improved. On the other hand, communication information from important contacts can be set to be processed in the safe system, which can avoid leakage of the communication information from the important contacts, and effectively ensure safety of the communication information from the important contacts.

The information of the initiator can be contact information of the initiator (for example, a telephone number, a mail address, and so on), an identifier of the initiator (for example, a name of the initiator), and so on. Processing the voice communication information includes answering the voice call, and so on. Processing the text communication information includes viewing the text communication information, editing the text communication information, forwarding the text communication information, and so on.

According to an embodiment of the present disclosure, processing the communication information in the first system or the second system according to the attribute information of the information of the initiator includes: determining whether an address book of the terminal includes the information of the initiator; and processing the communication information in the first system when it is determined that the address book of the terminal does not include the information of the initiator.

In the technical solution of the embodiment, the attribute information of the information of the initiator can be that whether the initiator is a contact person of the address book of the terminal. When the initiator is not a contact person of the address book of the terminal, the communication information is directly processed in the first system (e.g., the normal system).

Additionally, when the initiator is a contact person of the address book of the terminal, on one hand, following processing can be executed, that is, when it is determined that the address book of the terminal includes the information of the initiator, the communication information is processed in the second system. On the other hand, a system related to the information of the initiator is further determined, so as to cause the system related to the information of the initiator to process the communication information. Specifically, when it is determined that the system related to the information of the initiator is the first system, or when it is determined that the information of the initiator is not related to any system, the communication information is processed in the first system. When it is determined that the system related to the information of the initiator is the second system, the communication information is processed in the second system.

According to another embodiment of the present disclosure, processing the communication information in the first system or the second system according to the attribute information of the information of the initiator includes: determining a system related to the information of the initiator according to the attribute information of the information of the initiator; processing the communication information in the first system when it is determined that the system related to the information of the initiator is the first system, or it is determined that the information of the initiator is not related to any system; and processing the communication information in the second system when it is determined that the system related to the information of the initiator is the second system.

In the technical solution of the present disclosure, whether the initiator of the communication information is a contact person of the address book of the terminal is not determined, and the communication system is directly processed in the system related to the information of the initiator. Specifically, for example, an identifier for setting related initiators can be displayed on a setting interface of the terminal system. The user can set related initiators by loading the address book, and can also set related initiators by directly inputting contact information of the initiators.

In the above technical solution, preferably, the method further includes: processing the communication information directly when it is determined that the communication information is to be processed in the first system; and encrypting the communication information when it is determined that the communication information is to be processed in the second system, so as to avoid leakage of the communication information.

In the technical solution, the communication information is encrypted when the communication information is processed in the second system (for example, the safe system), which can avoid leakage of the communication information, and can effectively ensure safety of user information. Encrypting the communication information may include encrypting the text communication information, for example, hiding sensitive content of the text communication information, or replacing the sensitive content of the text communication information with other content, and performing anti-eavesdrop process on the voice communication information.

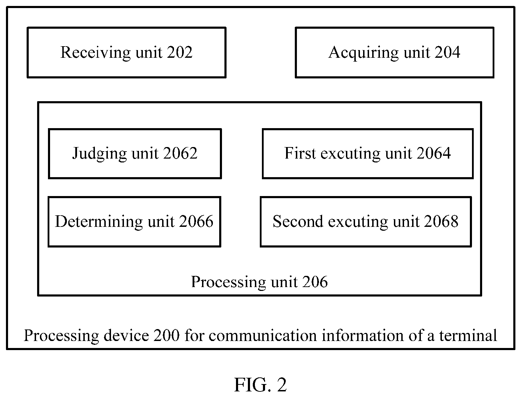

FIG. 2 is a schematic block diagram of a processing device for communication information of a terminal in accordance with an embodiment of the present disclosure.

As illustrated by FIG. 2, the processing device for communication information of the terminal in accordance with an embodiment of the present disclosure includes a receiving unit 202 configured to receive communication information, an acquiring unit 204 configured to acquire information of an initiator of the communication information when the receiving unit 202 receives the communication information, and a processing unit 206 configured to process the communication information in the first system or the second system according to attribute information of the information of the initiator.

In the technical solution, the system for processing the communication information is selected according to the attribute information of the information of the initiator. On one hand, a corresponding system can be selected to process communication information from some initiators according to the attribute information set by a user. For example, communication information from some initiators are set to be processed in a specified system, which can ensure that the user can independently set a system for processing communication information, thus operation experience of the user can be improved. On the other hand, communication information from important contacts can be set to be processed in the safe system, which can avoid leakage of the communication information from the important contacts, and effectively ensure safety of the communication information from the important contacts.

The information of the initiator can be contact information of the initiator (for example, a telephone number, a mail address, and so on), an identifier of the initiator (for example, a name of the initiator), and so on. The communication information may include voice communication information and text communication information. The voice communication information may be voice call information, voice call information of third-party applications (for example, QQ, Wechat, and so on), and so on. The text communication information may be message information, mail information, text messages of the third-part applications, and so on.

Processing the voice communication information includes answering the voice call, and so on. Processing the text communication information includes viewing the text communication information, editing the text communication information, forwarding the text communication information, and so on.

According to an embodiment of the present disclosure, the processing unit 206 includes a judging unit 2062 configured to judge whether an address book of the terminal includes the information of the initiator, and a first executing unit 2064 configured to process the communication information in the first system when the judging unit 2062 determines that the address book of the terminal does not include the information of the initiator.

In the technical solution of the embodiment, the attribute information of the information of the initiator can be that whether the initiator is a contact person of the address book of the terminal. When the initiator is not a contact person of the address book of the terminal, the communication information is directly processed in the first system (e.g., the normal system).

Additionally, when the initiator is a contact person of the address book of the terminal, on one hand, following processing can be executed, that is, the first executing unit 2064 is further configured to process the communication information in the second system when the judging unit 2062 determines that the address book of the terminal includes the information of the initiator. On the other hand, a system related to the information of the initiator can be further determined, so as to cause the system related to the information of the initiator to process the communication information. Specifically, when it is determined that the system related to the information of the initiator is the first system, or when it is determined that the information of the initiator is not related to any system, the communication information is processed in the first system. When it is determined that the system related to the information of the initiator is the second system, the communication information is processed in the second system.

According to another embodiment of the present disclosure, the processing unit 206 includes a determining unit 2066 configured to determine a system related to the information of the initiator according to the attribute information of the information of the initiator, and a second executing unit 2068 configured to process the communication information in the first system when the determining unit 2066 determines that the system related to the information of the initiator is the first system, or determines that the information of the initiator is not related to any system, and process the communication information in the second system when the determining unit 2066 determines that the system related to the information of the initiator is the second system.

In the technical solution of the present disclosure, whether the initiator of the communication information is a contact person of the address book of the terminal is not determined, and the communication system is directly processed in the system related to the information of the initiator. Specifically, for example, an identifier for setting related initiators can be displayed on a setting interface of the terminal system. The user can set related initiators by loading the address book, and can also set related initiators by directly inputting contact information of the initiators.

In the above technical solution, preferably, the processing unit 206 is configured to process the communication information directly when it is determined that the communication information is to be processed in the first system; and encrypting the communication information when it is determined that the communication information is to be processed in the second system, so as to avoid leakage of the communication information.

In the technical solution, the communication information is encrypted when the communication information is processed in the second system (for example, the safe system), which can avoid leakage of the communication information, and can effectively ensure safety of user information. Encrypting the communication information may include encrypting the text communication information, for example, hiding sensitive content of the text communication information, or replacing the sensitive content of the text communication information with other content, and performing anti-eavesdrop process on the voice communication information.

The present disclosure further provides a terminal (not shown in the accompanying drawings) which includes the processing device 200 for communication information of the terminal illustrated by FIG. 2.

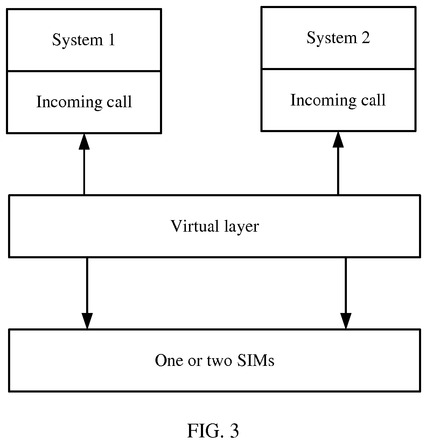

The following will specifically illustrate the technical solution of the present disclosure in combination with FIGS. 3-6, and a terminal which uses a normal system and a safe system to process an incoming call will be taken as an example.

As illustrated by FIG. 3, the terminal in accordance with an embodiment of the present disclosure includes a virtual layer. When an incoming call is received, the virtual layer firstly queries a contact database to determine whether the caller identification (ID) is in a contact list of the terminal. If the caller ID is not found, it indicates that the caller ID is a strange caller ID, and the virtual layer controls a system 1 to answer the incoming call. If the caller ID is found, it indicates that the caller ID is in the contact list, and following operations will be executed.

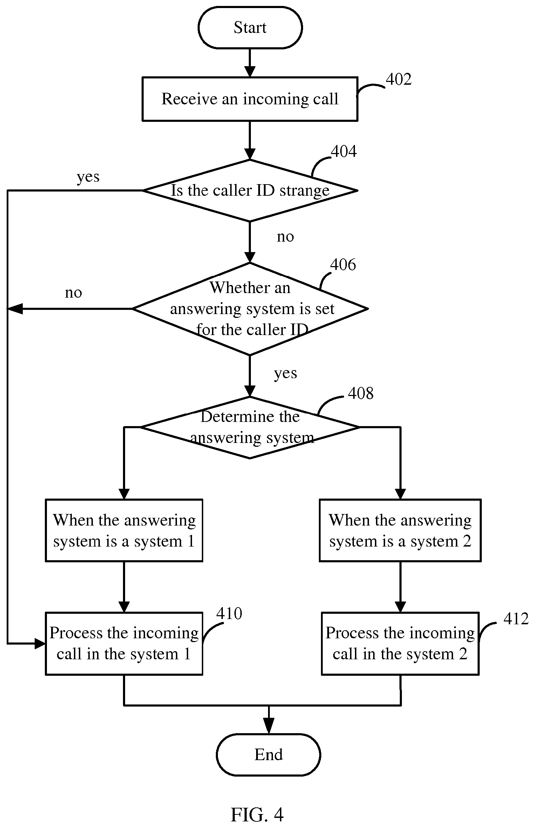

The terminal system determines whether an "answering system" is set for the caller ID. If an "answering system" is not set for the caller ID, the incoming call is answered in the default system, that is, the system 1. If the "answering system" for the caller ID is set to be the system 1, the incoming call is answered in the system 1. If the "answering system" for the caller ID is set to be a system 2, the incoming call is answered in the system 2. Detailed process is illustrated by FIG. 4.

As illustrated by FIG. 4, a processing method for an incoming call in accordance with an embodiment of the present disclosure includes following.

Step 402, an incoming call is received.

Step 404, whether the caller ID is a strange caller ID is determined. If yes, step 410 is executed, otherwise, step 406 is executed.

Step 406, when it is determined that the caller ID is not a strange caller ID, whether an "answering system" is set for the caller ID is determined. If yes, step 408 is executed, otherwise, step 410 is executed.

Step 408, when it is determined that an "answering system" is set for the caller ID, the "answering system" is determined. If the "answering system" is set to be the "system 1", step 410 is executed, and if the "setting system" is set to be the "system 2", step 412 is executed.

Step 410, the incoming call is processed in the system 1.

Step 412, the incoming call is processed in the system 2.

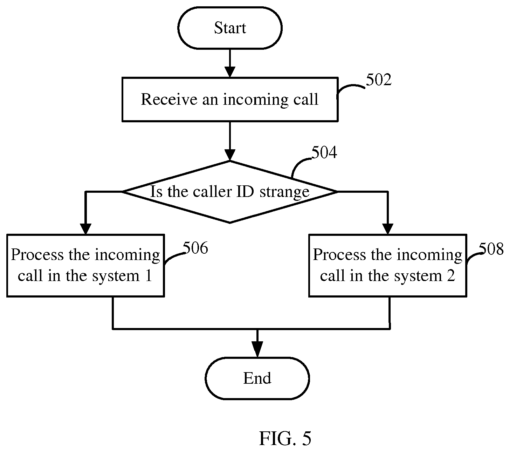

A processing method for an incoming call in accordance with another embodiment of the present disclosure is illustrated by FIG. 5.

As illustrated by FIG. 5, the processing method for an incoming call in accordance with another embodiment of the present disclosure includes following.

Step 502, an incoming call is received.

Step 504, whether the caller ID is a strange caller ID is determined. If yes, step 506 is executed, otherwise, step 508 is executed.

Step 506, when it is determined that the caller ID is a strange caller ID, the incoming call is processed in the system 1.

Step 508, when it is determined that the caller ID is not a strange caller ID, the incoming call is processed in the system 2.

In the embodiment, which system is determined to be used to process the incoming call is determined by determining whether the caller ID is a strange caller ID.

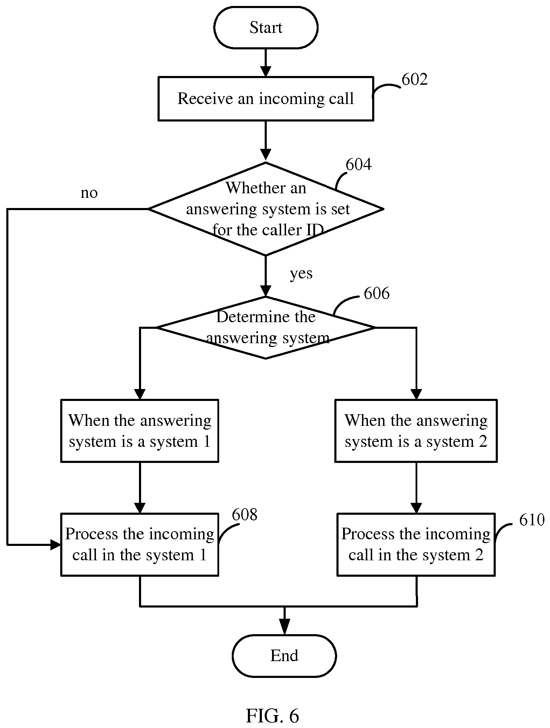

A processing method for an incoming call in accordance with yet another embodiment of the present disclosure can be illustrated by FIG. 6.

As illustrated by FIG. 6, the processing method for an incoming call in accordance with yet another embodiment of the present disclosure includes following.

Step 602, an incoming call is received.

Step 604, whether an "answering system" is set for the caller ID is determined. If yes, step 606 is executed, otherwise, step 608 is executed.

Step 606, when it is determined that an "answering system" is set for the caller ID, the "answering system" is determined. When it is determined that the "answering system" is set to be the "system 1", step 608 is executed. When it is determined that the "answering system" is set to be the "system 2", step 610 is executed.

Step 608, the incoming call is processed in the system 1.

Step 610, the incoming call is processed in the system 2.

In the embodiment, which system is determined to be used to process the incoming call is determined according to the "answering system" for the caller ID.

In an embodiment of the present disclosure, an option for setting an "answering system" can be added to a contact editing interface of the terminal system. By means of the option, the user can select a system to answer the incoming call according to user's needs. Specifically, for an incoming call which needs to be kept secret or from an important contact person, a system having a high safe performance can be set to answer the incoming call. For an incoming call from an unimportant contact person or from a strange person, a normal system can be set to answer the incoming call. The processing method for other communication information is similar to the processing method for an incoming call, which will not be repeated herein.

In accordance with another embodiment of the present disclosure, a setting option for correlating contact persons with systems can be added to a setting interface of the terminal system. The user can perform operations to correlate contact persons with systems by downloading the address book, and can also perform operations to correlate contact persons with systems by inputting telephone numbers.

For those skilled in the art, what needs to be understood is that in the present disclosure, the dual-system terminal is taken as an example to illustrate the processing scheme for communication information. Terminals having three or more systems can adopt the technical solution of the present disclosure to process communication information. That is, each system can adopt a corresponding process method for communication information. For example, for the dual-system terminal, the communication information can be directly processed in the normal system, or can be encrypted in the safety system.

The above specifically illustrates the technical solution of the present disclosure. In the present disclosure, a new processing method for communication information of a terminal is provided. On one hand, a user can independently set a system for processing communication information, thus operation experience of the user can be improved. On the other hand, communication information from important contacts can be set to be processed in the safe system, which can avoid leakage of the communication information from the important contacts, and can effectively ensure safety of the communication information from the important contacts.

The foregoing descriptions are merely preferred embodiments of the present disclosure, but are not intended to limit the present disclosure. For those skilled in the art, various changes and variations can be made according to the present disclosure, within the scope of the claims.

## Claims

1. A method for processing communication information of a terminal, the terminal comprising a normal system and a safe system, the processing method comprising:
acquiring attribute information of an initiator of communication when communication information is received, wherein communication information comprises at least one of voice data or text data received from the initiator;
processing the voice data or text data in the normal system or the safe system according to attribute information of the initiator; and
encrypting the voice data or text data when it is determined that the communication information is to be processed in the safe system;
wherein the processing method further comprises:
processing the voice data or text data directly when it is determined that the communication information is to be processed in the normal system;
wherein encrypting the voice data or text data comprises:
hiding sensitive content of a text communication information, or replacing the sensitive content of the text communication information with other content when encrypting the text data; or performing anti-eavesdrop process on a voice communication information when encrypting the voice data.

2. The processing method of claim 1, wherein processing the communication information in the normal system or the safe system according to the attribute information of the initiator comprises:
determining whether an address book of the terminal comprises attribute information of the initiator; and
processing the voice data or text data in the normal system when it is determined that the address book of the terminal does not comprise attribute information of the initiator.

3. The processing method of claim 2, wherein the processing method further comprises:
processing the voice data or text data in the safe system when it is determined that the address book of the terminal comprises attribute information of the initiator.

4. The processing method of claim 1, wherein processing the communication information in the normal system or the safe system according to the attribute information of the initiator comprises:
determining a system related to the initiator according to the attribute information of the initiator;
processing the voice data or text data in the normal system when it is determined that the system related to the initiator is the normal system, or when it is determined that the initiator is not related to any system; and
processing the voice data or text data in the safe system when it is determined that the system related to the initiator is the safe system.

5. A processing device (200) for processing communication information, the processing device (200) comprising:
a receiving unit (202) configured to receive communication information, wherein communication information comprises at least one of voice data or text data received from an initiator;
an acquiring unit (204) configured to acquire attribute information of the initiator of the communication when the receiving unit (202) receives the communication information; and
a processing unit (206) configured to:
process the voice data or text data in a normal system or a safe system according to the attribute information of the initiator, and
encrypt the voice data or text data when it is determined that the communication information is to be processed in the safe system;
wherein the processing unit (206) is further configured to:
process the voice data or text data directly when it is determined that the communication information is to be processed in the normal system;
wherein in terms of encrypting the voice data or text data, the processing unit (206) is configured to: hide sensitive content of a text communication information, or replace the sensitive content of the text communication information with other content when encrypting the text data; or perform anti-eavesdrop process on a voice communication information when encrypting the voice data.

6. The processing device (200) of claim 5, wherein the processing unit (206) comprises:
a judging unit (2062) configured to judge whether an address book comprises attribute information of the initiator; and
a first executing unit (2064) configured to process the voice data or text data in the normal system when the judging unit determines that the address book does not comprise the attribute information of the initiator.

7. The processing device (200) of claim 6, wherein the first executing unit (2064) is further configured to process the voice data or text data in the safe system when the judging unit (2062) determines that the address book of the terminal comprises the attribute information of the initiator.

8. The processing device (200) of claim 5, wherein the processing unit (206) comprises:
a determining unit (2066) configured to determine a system related to the initiator according to the attribute information of the initiator; and
a second processing unit (2068) configured to process the voice data or text data in the normal system when the determining unit determines that the system related to the initiator is the normal system or determines that the initiator is not related to any system, and process the voice data or text data in the safe system when the determining unit determines that the system related to the initiator is the safe system.

9. A terminal comprising a processing device (200) for processing communication information according to any of claims 5-8.

## Patentansprüche

1. Verfahren zum Verarbeiten von Kommunikationsinformationen eines Endgeräts, wobei das Endgerät ein normales System und ein sicheres System umfasst, wobei das Verarbeitungsverfahren Folgendes umfasst:
Erlangen von Attributinformationen von einem Kommunikationsinitiator, wenn Kommunikationsinformationen empfangen werden, wobei die Kommunikationsinformationen zumindest eines aus von dem Initiator empfangenen Sprachdaten oder Textdaten umfassen;
Verarbeiten der Sprachdaten oder Textdaten in dem normalen System oder dem sicheren System entsprechend Attributinformationen des Initiators; und
Verschlüsseln der Sprachdaten oder Textdaten, wenn bestimmt wird, dass die Kommunikationsinformationen im sicheren System zu verarbeiten sind;
wobei das Verarbeitungsverfahren ferner Folgendes umfasst:
direktes Verarbeiten der Sprachdaten oder Textdaten, wenn bestimmt wird, dass die Kommunikationsinformationen im normalen System zu verarbeiten sind;
wobei das Verschlüsseln der Sprachdaten oder Textdaten Folgendes umfasst:
Verbergen von sensiblem Inhalt von Textkommunikationsinformationen oder Ersetzen des sensiblen Inhalts der Textkommunikationsinformationen durch einen anderen Inhalt beim Verschlüsseln der Textdaten; oder Durchführen eines Anti-Mithör-Verfahrens an Sprachkommunikationsinformationen beim Verschlüsseln der Sprachdaten.

2. Verarbeitungsverfahren nach Anspruch 1, wobei das Verarbeiten der Kommunikationsinformationen in dem normalen System oder in dem sicheren System gemäß der Attributinformationen des Initiators Folgendes umfasst:
Bestimmen, ob ein Adressbuch des Endgeräts Attributinformationen des Initiators umfasst; und
Verarbeiten der Sprachdaten oder Textdaten in dem normalen System, wenn bestimmt wird, dass das Adressbuch des Endgeräts keine Attributinformationen des Initiators umfasst.

3. Verarbeitungsverfahren nach Anspruch 2, wobei das Verarbeitungsverfahren Folgendes umfasst:
Verarbeiten der Sprachdaten oder Textdaten in dem sicheren System, wenn bestimmt wird, dass das Adressbuch des Endgeräts Attributinformationen des Initiators umfasst.

4. Verarbeitungsverfahren nach Anspruch 1, wobei das Verarbeiten der Kommunikationsinformationen in dem normalen System oder in dem sicheren System entsprechend den Attributinformationen des Initiators Folgendes umfasst:
Bestimmen eines mit dem Initiator im Zusammenhang stehenden Systems entsprechend den Attributinformationen des Initiators;
Verarbeiten der Sprachdaten oder Textdaten in dem normalen System, wenn bestimmt wird, dass das mit dem Initiator im Zusammenhang stehende System das normale System ist, oder wenn bestimmt wird, dass der Initiator mit keinem System im Zusammenhang steht; und
Verarbeiten der Sprachdaten oder der Textdaten in dem sicheren System, wenn bestimmt wird, dass das mit dem Initiator im Zusammenhang stehende System das sichere System ist.

5. Verarbeitungsvorrichtung (200) zum Verarbeiten von Kommunikationsinformationen, wobei die Verarbeitungsvorrichtung (200) Folgendes umfasst:
eine Empfangseinheit (202), die konfiguriert ist zum Empfangen von Kommunikationsinformationen, wobei die Kommunikationsinformationen zumindest eines aus Sprachdaten oder Textdaten, die von einem Initiator empfangen werden, umfassen;
eine Erfassungseinheit (204), die konfiguriert ist zum Erfassen von Attributinformationen des Kommunikationsinitiators, wenn die Empfangseinheit (202) die Kommunikationsinformationen empfängt; und
wobei die Verarbeitungseinheit (206) für Folgendes konfiguriert ist:
Verarbeiten der Sprachdaten oder Textdaten in einem normalen System oder einem sicheren System entsprechend den Attributinformationen des Initiators; und
Verschlüsseln der Sprachdaten oder Textdaten, wenn bestimmt wird, dass die Kommunikationsinformationen im sicheren System zu verarbeiten sind;
wobei die Verarbeitungseinheit (206) ferner für Folgendes ausgelegt ist:
direktes Verarbeiten der Sprachdaten oder Textdaten, wenn bestimmt wird, dass die Kommunikationsinformationen im normalen System zu verarbeiten sind;
wobei die Verarbeitungseinheit (206) in Bezug auf das Verschlüsseln der Sprachdaten oder Textdaten für Folgendes konfiguriert ist: Verbergen von sensiblem Inhalt von Textkommunikationsinformationen oder Ersetzen des sensiblen Inhalts der Textkommunikationsinformationen durch einen anderen Inhalt beim Verschlüsseln der Textdaten; oder Durchführen eines Anti-Mithör-Verfahrens an Sprachkommunikationsinformationen beim Verschlüsseln der Sprachdaten.

6. Verarbeitungsvorrichtung (200) nach Anspruch 5, wobei die Verarbeitungseinheit (206) Folgendes umfasst:
eine Beurteilungseinheit (2062), die konfiguriert ist zum Beurteilen, ob ein Adressbuch Attributinformationen des Initiators umfasst; und
eine erste Ausführungseinheit (2064), die konfiguriert ist zum Verarbeiten der Sprachdaten oder Textdaten in dem normalen System, wenn die Beurteilungseinheit bestimmt, dass das Adressbuch keine Attributinformationen des Initiators umfasst.

7. Verarbeitungsvorrichtung (200) nach Anspruch 6, wobei die erste Ausführungseinheit (2064) ferner konfiguriert ist zum Verarbeiten der Sprachdaten oder Textdaten in dem sicheren System, wenn die Beurteilungseinheit (2062) bestimmt, dass das Adressbuch des Endgeräts die Attributinformationen des Initiators umfasst.

8. Verarbeitungsvorrichtung (200) nach Anspruch 5, wobei die Verarbeitungseinheit (206) Folgendes umfasst:
eine Bestimmungseinheit (2066), die konfiguriert ist zum Bestimmen eines mit dem Initiator im Zusammenhang stehenden Systems entsprechend den Attributinformationen des Initiators; und
eine zweite Verarbeitungseinheit (2068), die konfiguriert ist zum Verarbeiten der Sprachdaten oder Textdaten in dem normalen System, wenn die Bestimmungseinheit bestimmt, dass das mit dem Initiator im Zusammenhang stehende System das normale System ist, oder wenn die Bestimmungseinheit bestimmt, dass der Initiator mit keinem System im Zusammenhang steht, und zum Verarbeiten der Sprachdaten oder der Textdaten in dem sicheren System, wenn bestimmt wird, dass das mit dem Initiator im Zusammenhang stehende System das sichere System ist.

9. Endgerät, das eine Verarbeitungsvorrichtung (200) zum Verarbeiten von Kommunikationsinformationen nach einem der Ansprüche 5 bis 8 umfasst.

## Revendications

1. Procédé de traitement d'informations de communication d'un terminal, le terminal comprenant un système normal et un système sécurisé, le procédé de traitement comprenant les étapes consistant à :
acquérir des informations d'attribut d'un initiateur de communication lorsque des informations de communication sont reçues, dans lequel les informations de communication comprennent au moins certaines de données vocales ou de données textuelles reçues depuis l'initiateur ;
traiter les données vocales ou les données textuelles dans le système normal ou le système sécurisé selon les informations d'attribut de l'initiateur ; et
crypter les données vocales ou les données textuelles lorsqu'il est déterminé que les informations de communication doivent être traitées dans le système sécurisé ;
dans lequel le procédé de traitement comprend en outre l'étape consistant à :
traiter des données vocales ou des données textuelles directement lorsqu'il est déterminé que les informations de communication doivent être traitées dans le système normal ;
dans lequel le cryptage des données vocales ou des données textuelles comprend :
cacher un contenu sensible d'une information de communication textuelle, ou remplacer le contenu sensible de l'information de communication textuelle par un autre contenu lors du cryptage des données textuelles ; ou réaliser un processus anti-écoute sur des informations de communication vocale lors du cryptage des données vocales.

2. Procédé de traitement selon la revendication 1, dans lequel le traitement des informations de communication dans le système normal ou le système sécurisé selon les informations d'attribut de l'initiateur comprend les étapes consistant à :
déterminer si un carnet d'adresses du terminal comprend des informations d'attribut de l'initiateur ; et
traiter les données vocales ou les données textuelles dans le système normal lorsqu'il est déterminé que le carnet d'adresses du terminal ne comprend pas d'informations d'attribut de l'initiateur.

3. Procédé de traitement selon la revendication 2, dans lequel le procédé de traitement comprend en outre l'étape consistant à :
traiter les données vocales ou les données textuelles dans le système sécurisé lorsqu'il est déterminé que le carnet d'adresses du terminal comprend des informations d'attribut de l'initiateur.

4. Procédé de traitement selon la revendication 1, dans lequel le traitement des informations de communication dans le système normal ou le système sécurisé selon les informations d'attribut de l'initiateur comprend les étapes consistant à :
déterminer un système lié à l'initiateur en fonction des informations d'attribut de l'initiateur ;
traiter les données vocales ou les données textuelles dans le système normal lorsqu'il est déterminé que le système lié à l'initiateur est le système normal, ou lorsqu'il est déterminé que l'initiateur n'est lié à aucun système ; et
traiter les données vocales ou les données textuelles dans le système sécurisé lorsqu'il est déterminé que le système lié à l'initiateur est le système sécurisé.

5. Dispositif de traitement (200) pour traiter des informations de communication, le dispositif de traitement (200) comprenant :
une unité de réception (202) conçue pour recevoir des informations de communication, dans lequel les informations de communication comprennent au moins certaines de données vocales ou de données textuelles reçues depuis un initiateur ;
une unité d'acquisition (204) configurée pour acquérir des informations d'attribut de l'initiateur de la communication lorsque l'unité de réception (202) reçoit les informations de communication ; et
une unité de traitement (206) configurée pour :
traiter les données vocales ou les données textuelles dans un système normal ou un système sécurisé selon les informations d'attribut de l'initiateur, et
crypter les données vocales ou les données textuelles lorsqu'il est déterminé que les informations de communication doivent être traitées dans le système sécurisé ;
dans lequel l'unité de traitement (206) est en outre configurée pour
traiter des données vocales ou des données textuelles directement lorsqu'il est déterminé que les informations de communication doivent être traitées dans le système normal ;
dans lequel en termes de cryptage des données vocales ou des données textuelles, l'unité de traitement (206) est configurée pour : cacher un contenu sensible d'une information de communication textuelle, ou remplacer le contenu sensible de l'information de communication textuelle par un autre contenu lors du cryptage des données textuelles ; ou réaliser un processus anti-écoute sur des informations de communication vocale lors du cryptage des données vocales.

6. Dispositif de traitement (200) selon la revendication 5, dans lequel l'unité de traitement (206) comprend :
une unité d'évaluation (2062) configurée pour évaluer si un carnet d'adresses comprend des informations d'attribut de l'initiateur ; et
une première unité d'exécution (2064) configurée pour traiter les données vocales ou les données textuelles dans le système normal lorsque l'unité d'évaluation détermine que le carnet d'adresses ne comprend pas les informations d'attribut de l'initiateur.

7. Dispositif de traitement (200) selon la revendication 6, dans lequel la première unité d'exécution (2064) est en outre configurée pour traiter les données vocales ou les données de texte dans le système sécurisé lorsque l'unité d'évaluation (2062) détermine que le carnet d'adresses du terminal comprend les informations d'attribut de l'initiateur.

8. Dispositif de traitement (200) selon la revendication 5, dans lequel l'unité de traitement (206) comprend :
une unité de détermination (2066) configurée pour déterminer un système lié à l'initiateur selon les informations d'attribut de l'initiateur ; et
une seconde unité de traitement (2068) configurée pour traiter les données vocales ou les données textuelles dans le système normal lorsque l'unité de détermination détermine que le système lié à l'initiateur est le système normal ou détermine que l'initiateur n'est lié à aucun système, et traiter les données vocales ou les données textuelles dans le système sécurisé lorsque l'unité de détermination détermine que le système lié à l'initiateur est le système sécurisé.

9. Terminal comprenant un dispositif de traitement (200) destiné à traiter des informations de communication selon l'une quelconque des revendications 5 à 8.
